# EUROPÄISCHE PATENTSCHRIFT

(11) **EP 3 282 907 B1**
(45) Veröffentlichungstag und Bekanntmachung des Hinweises auf die Patenterteilung: **31.03.2021**
(21) Anmeldenummer: 16716040.7
(22) Anmeldetag: 13.04.2016
(51) Int. Cl.: A47J 43/06

(54) **DURCHLASSVERSTELLVORRICHTUNG MIT AXIALLAGER FÜR VORRICHTUNG ZUM ZERKLEINERN VON LEBENSMITTELN UND VORRICHTUNG ZUM ZERKLEINERN VON LEBENSMITTELN MIT DURCHLASSVERSTELLVORRICHTUNG**
PASSAGE ADJUSTMENT DEVICE HAVING AN AXIAL BEARING FOR A DEVICE FOR COMMINUTING FOODS AND DEVICE FOR COMMINUTING FOODS HAVING A PASSAGE ADJUSTMENT DEVICE
DISPOSITIF DE RÉGLAGE DE PASSAGE À PALIER AXIAL POUR DISPOSITIF DE BROYAGE DE PRODUIT ALIMENTAIRE ET DISPOSITIF DE BROYAGE DE PRODUIT ALIMENTAIRE ÉQUIPÉ D'UN DISPOSITIF DE RÉGLAGE DE PASSAGE

(30) Priorität: 16.04.2015 DE 102015206935
(43) Veröffentlichungstag der Anmeldung: 21.02.2018
(73) Patentinhaber: BSH Hausgeräte GmbH, 81739 München (DE)
(72) Erfinder: GOLAVSEK, Samo, 3312 Prebold (SI); SEMEJA, Uros, 3327 Smartno ob Paki (SI); HRIBERSEK, Anton, 3330 Mozirje (SI); ATELSEK, Darko, 3331 Nazarje (SI)
(86) Internationale Anmeldenummer: PCT/EP2016/058053
(87) Internationale Veröffentlichungsnummer: WO 2016/166121

(56) Entgegenhaltungen:
- EP-A1- 0 004 987
- EP-A1- 0 004 987
- EP-A1- 1 232 711
- WO-A1-2007/046029
- DE-T2-602004 007 354

## Beschreibung

### Hintergrund der Erfindung

Die Erfindung betrifft eine Durchlassverstellvorrichtung mit der auf einfache Weise die Größe eines Zerkleinerungsgutes eingestellt werden kann, indem eine gewünschte Lochgröße für das Zerkleinerungsgut voreingestellt wird, welches bei entsprechendem Schnittgrad durch die Öffnung fällt gemäß den Merkmalen des Patentanspruches 1. Ebenso betrifft die Erfindung eine Vorrichtung zum Zerkleinern von Lebensmitteln mit einer erfindungsgemäßen Durchlassverstellvorrichtung gemäß den Merkmalen des Patentanspruches 8.

### Stand der Technik

Vorrichtungen dieser Gattung sind aus dem Stand der Technik bekannt, insbesondere zeigt die deutsche Offenlegungsschrift DE 10001455 A1 eine Vorrichtung zum Zerkleinern von Lebensmitteln mit verstellbarem Durchlass. Die darin gezeigte Vorrichtung zum Zerkleinern von Lebensmitteln, insbesondere Eiswürfeln, weist einen Behälterkörper auf, der in einen oberen Bearbeitungsbereich und in einen unteren Sammelbereich unterteilt ist. Das im Bearbeitungsbereich rotierende Zerkleinerungswerkzeug dient zum Zerkleinern der Lebensmittel. Zwischen dem Bearbeitungsbereich und dem Sammelbereich sind in einer Ausführungsform zwei Siebe angebracht, deren Öffnungen sich überlappen. Durch Verdrehen des Innensiebes, an dem auch ein Axiallager für das Zerkleinerungswerkzeug befestigt ist, kann der Überlappungsbereich der Durchlasslöcher der Siebe verstellt werden und damit die Größe des Durchlasses für zerkleinertes Schnittgut. Falls sich im Bearbeitungsbereich Lebensmittel befinden ist eine Verstellung bei dieser Vorrichtung schwierig, da man durch die Lebensmittel hindurchgreifen muss, um an das verdrehbare Innensieb zu gelangen. Ferner ist nicht sichergestellt, dass während der Bearbeitung eine definierte Offnungsgröße eingehalten wird, da die beiden Siebe nicht gegeneinander gesichert sind. Weitere relevante Stand der Technik Dokumente sind: US 2001/008258 A1, DE 60 2004 007354 T2, EP 1 232 711 A1, EP 0 004 987 A1, DE 100 01 455 A1.

### Das der Erfindung zugrunde liegende Problem

Der Erfindung liegt die Aufgabe zugrunde eine verbesserte Durchlassverstellvorrichtung mit Axiallager und Vorrichtung zum Zerkleinern von Lebensmitteln anzugeben.

Generell ist bei Haushaltsgeräten eine zuverlässige und bequeme Bedienung wünschenswert. Für die Sicherstellung eines zuverlässigen Betriebs und einer technisch einfachen Realisierung ist ein einfacher Aufbau einer Vorrichtung zur Zerkleinerung von Lebensmitteln und einer Durchlassverstellvorrichtung wünschenswert. Ein technisch einfacher Aufbau erhöht auch die Zuverlässigkeit.

Der vorliegenden Erfindung liegt demnach insbesondere die Aufgabe zugrunde, eine verbesserte Durchlassverstellvorrichtung und eine Vorrichtung zur Zerkleinerung von Lebensmitteln anzugeben, welche definierte Einstellmöglichkeiten für die Durchlassgröße zur Verfügung stellt und die Anzahl der benötigten Bauelemente reduziert.

### Erfindungsgemäße Lösung

Zur Lösung der Aufgabe lehrt die vorliegende Erfindung eine Durchlassverstellvorrichtung gemäß den Merkmalen des Patentanspruches 1 und eine Vorrichtung zum Zerkleinern von Lebensmitteln mit Durchlassverstellvorrichtung, gemäß den Merkmalen des Patentanspruches 8.

Erfindungsgemäß wird für die Durchlassverstellvorrichtung lediglich ein Siebaufsatz in Verbindung mit einem Behälter und einer Haltevorrichtung für ein Axiallager benötigt. Dabei wird die Haltevorrichtung so ausgestaltet, dass sie Bereiche aufweist welche in einer bestimmten Drehposition des Siebaufsatzes dort vorhandene Öffnungen freigeben, oder je nach Drehlage definiert überlappen. Auf diese Weise kann auf ein zweites Sieb verzichtet werden und anstatt ein Zerkleinerungswerkzeug in einem mechanisch instabilen Sieb zu lagern, wird das Zerkleinerungswerkzeug direkt von einer Haltevorrichtung gestützt. In vorteilhafter Weise wird somit die Funktion der Stützung des Axiallagers mit der Funktion der Durchlassverstellung kombiniert.

Speziell weist die Haltestruktur eine in horizontaler Richtung verlaufende Verjüngung auf. Diese in Kombination mit in derselben Ebene liegenden Öffnungen des Siebaufsatzes ermöglicht es durch geeignete Positionierung der Verjüngung und der daran angrenzenden breiteren Materialstruktur der Haltestruktur bei geeigneter Lage über der Öffnung der Siebstruktur einen definierten Überlappungsbereich einzustellen, der eine planbare und vorgebbare Durchlassöffnung zwischen Haltestruktur und Öffnung im Sieb freigibt. Je nachdem, ob die Öffnung in der Siebstruktur weiter in den Bereich der Verjüngung hineingedreht wird, wird die Öffnung größer in umgekehrter Richtung wenn die Sieböffnung zu einem großen Teil über der breiteren Struktur der Haltestruktur zum Liegen kommt wird die Öffnung kleiner. Auf diese Weise legt sich der breitere Bereich der Haltestruktur sukzessive über die Öffnung im Siebaufsatz oder gibt diese frei, je nachdem in welche Richtung der Siebaufsatz gegenüber der Haltestruktur verdreht wird. Gleichzeitig gewährleistet die Haltestruktur eine sichere Aufnahme des Axiallagers für ein Zerkleinerungswerkzeug und damit einen definierten Betrieb mit sicher einzuhaltender konstanter Zerkleinerungsleistung, da das Zerkleinerungswerkzeug stabil geführt wird.

### Aufbau und Weiterbildung der erfindungsgemäßen Lösung

Vorteilhafte Aus- und Weiterbildungen, welche einzeln oder in Kombination miteinander eingesetzt werden können, sind Gegenstand der abhängigen Ansprüche.

Der Siebaufsatz ist gegenüber der Haltevorrichtung drehbar angeordnet. Dadurch ist auf konstruktiv einfache Weise eine Verstellbarkeit der Verstelleinrichtung erreichbar.

Diese Ausführungsform der Erfindung kann so weitergebildet werden, dass durch eine geeignete Drehlage der breitere Bereich der Haltevorrichtung sich wie ein Schieber über die Öffnung im Siebaufsatz legt und so ein definierter Durchlass einstellen lässt.

Der Siebaufsatz und der Behälter weisen zueinander korrespondierende Eingriffsmittel, wie beispielsweise Nuten und Vorsprünge auf, welche es gestatten sie gegeneinander in mindestens zwei definierten Drehpositionen zu fixieren. Auf diese Weise kann eine konstruktiv einfache Verstelleinrichtung bereitgestellt werden, bei der eine fixierte Drehposition zwischen Haltestruktur und Siebaufsatz einstellbar ist.

Vorzugsweise ist die Verstelleinrichtung so ausgebildet, dass mindestens zwei unterschiedlich große Öffnungen in der verstellbaren Durchlassvorrichtung eingestellt werden können.

Vorzugsweise ist an der Haltevorrichtung ein horizontal verlaufender Kragenbereich vorhanden, der beim Verdrehen des Siebaufsatzes über der Öffnung im Siebaufsatz zu liegen kommt. Dadurch ist auf konstruktiv einfache Weise eine glattflächige, gut schließende, schieberartige Überlappung der Öffnung erreichbar.

Wenn das geometrische Verhältnis zwischen der fixierten Position, der Lage der Öffnung und der Lage der Haltestruktur so gewählt wird, dass die Haltestruktur die Öffnung teilweise überlappt, dann kann auf einfache Weise eine vordefinierte Durchlassgröße eingestellt werden.

Sofern der Siebaufsatz mit einem zylindrischen Kragenteil ausgebildet ist, an welches ein kegelstumpfförmiger Teil angrenzt, kann die Öffnung im kegelstumpfförmigen Teil angeordnet werden und gleichzeitig ergibt sich aus der Verbindung zwischen Siebaufsatz und Behälter ein homogen zylindrischer Körper mit ansprechender optischer Erscheinung.

Besonders vorteilhaft ist in der Siebstruktur eine Öffnung zum Durchtritt des Axiallagers angeordnet. Auf diese Weise kann das Axiallager gleichzeitig als Drehlager für den Siebaufsatz dienen und das Zerkleinerungswerkzeug aufnehmen.

Besonders günstig ist es, wie bei einer Weiterbildung der erfindungsgemäßen Durchlassverstellvorrichtung die Haltestruktur lösbar am Behälter anzubringen. Auf diese Weise sind die Bauteile einzeln demontierbar und eine besonders einfache Reinigung der Einzelteile wird möglich.

Eine erfindungsgemäße Vorrichtung zum Zerkleinern von Lebensmitteln mit einer Durchlassverstellvorrichtung stellt mit einer minimalen Anzahl von Bauteilen eine technisch einfache und stabile Vorrichtung zum Zerkleinern von Lebensmitteln bereit, bei der auf einfache Weise ein Zerkleinerungsgrad der Lebensmittel einstellbar ist.

### Kurzbeschreibung der Zeichnungen

Die Erfindung wird im Folgenden anhand schematischer Zeichnungen und anhand von Ausführungsbeispielen weiter erläutert.

Es zeigen:
- Figur 1: einen Siebaufsatz und einen Behälter mit Haltestruktur;
- Figur 2: den Siebaufsatz in einer ersten Drehlage;
- Figur 3: den Siebaufsatz in einer zweiten Drehlage;
- Figur 4: den Siebaufsatz in einer dritten Drehlage; und
- Figur 5: eine Seitenansicht zur Verdeutlichung von korrespondierenden Eingriffsmitteln und definiert einstellbaren Drehlagen.

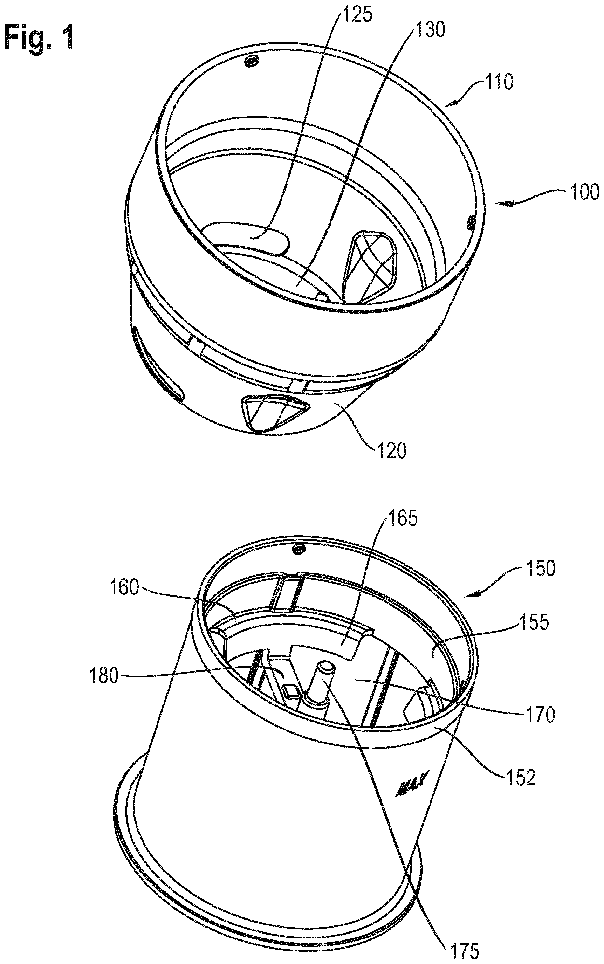

Wie Figur 1 zeigt, hat ein Siebaufsatz 100 einen im Wesentlichen flachen Kragenbereich 110, einen Boden 130 und einen kegelstumpfförmigen Ansatz 120. Durch die Querschnittsveränderung vom Kragenbereich 110 zum kegelstumpfförmigen Ansatz 120 ist eine einfache Kombination mit einem Behälter 150 möglich, der im Wesentlichen den gleichen Durchmesser und eine zylindrische Gestalt aufweist. Der kegelstumpfförmige Ansatz 120 wird nach der Kombination vom Inneren des Behälters 150 aufgenommen und der kragenförmige Bereich des Siebaufsatzes 110 bildet mit der Behälterkontur des Behälters 150 einen im Wesentlichen glattflächig erscheinenden zylindrischen Körper. Ferner ist im kegelstumpfförmigen Ansatz 120 eine längliche Öffnung 125 beispielhaft dargestellt. Hier ist die Öffnung im Wesentlichen als bei abgestelltem Behälter horizontal verlaufendes Rechteck mit abgerundeten Stirnseiten dargestellt. Am Behälter 150 ist eine Haltestruktur 155 zu erkennen welche ein Axiallager 175 zur Lagerung eines Zerkleinerungswerkzeuges aufnimmt. Beispielsweise wird das Axiallager durch eine sternförmige Stützstruktur mit Streben 180 abgestützt, die eine stabile Führung des Lagers gewährleisten und damit einen möglichst definierten Zerkleinerungsbetrieb sicherstellen. Ferner ist an der Haltestruktur ein verbreiterter Steg 160 dargestellt, auf welchem der Siebaufsatz aufliegen kann und sicher abgestützt wird. Ebenso ist deutlich erkennbar ein horizontal verlaufender Kragenbereich 165 in der Haltestruktur erkennbar. Der Kragenbereich 165 wird durch eine Ausnehmung, beziehungsweise Einbuchtung 170 in der Haltestruktur unterbrochen. Aus sich des Kragenbereiches 165 kann die Ausnehmung auch als Verjüngung des Kragenbereiches 165 betrachtet werden. Am oberen Bereich des Behälters 150 ist eine Kragenstruktur 152 zu erkennen, welche beispielsweise Eingriffselemente zur Arretierung des Siebaufsatzes aufnehmen kann. Im Boden des Siebaufsatzes 130 ist vorteilhafterweise eine Öffnung für das Axiallager 175 in der Haltestruktur 155 angebracht.

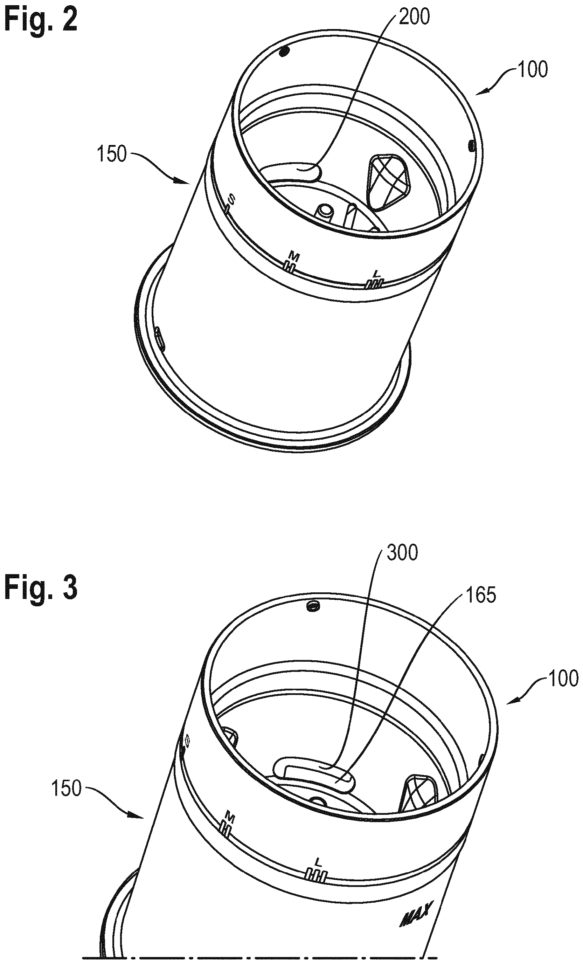

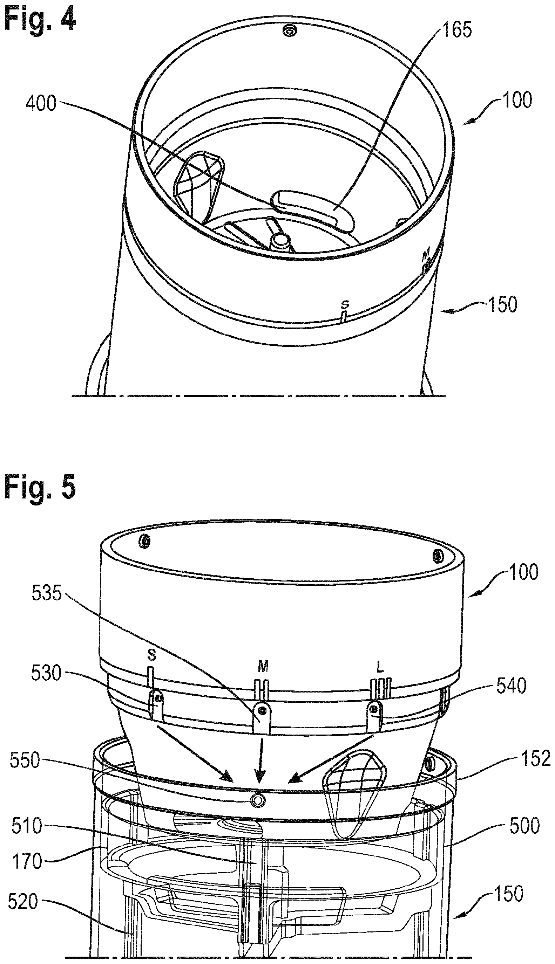

Die Figuren 2 bis 4 zeigen den Siebaufsatz 100 und den Behälter 150 in unterschiedlichen Positionen zueinander, wobei der Siebaufsatz definiert gegen den Behälter verdreht angeordnet ist. Aus Figur 2 ist erkennbar, dass eine Öffnung 200 im Siebaufsatz vollständig freigegeben wird und damit großstückiges Zerkleinerungsgut durchlassen kann, da eine große Durchlassöffnung für das Zerkleinerungsgut eingestellt ist. Dagegen ist in Figur 3 erkennbar, dass die Haltestruktur 165 einen Teil der Öffnung 300 verdeckt und damit lediglich eine kleinere Öffnung für zerkleinerte Lebensmittel freigibt. Hier ist ebenso erkennbar, dass der Kragenbereich in der Haltestruktur die Öffnung 300 sowohl horizontal als auch vertikal begrenzt. Hier sind beliebige auch geometrisch komplexere Überlappungsstrukturen denkbar, die einen optimalen Verstellbereich bei kurzen Verstellwegen gewährleisten. Wie aus Figur 4 zu erkennen ist, ist eine dort durch Verdrehung des Siebaufsatzes 100 gegenüber dem Behälter 150 eingestellte Öffnung 400 sehr klein gewählt. Dies ist daran zu erkennen, dass die im Siebaufsatz vorhandene Öffnung durch eine Kragenstruktur 165 der Haltevorrichtung weitestgehend verdeckt wird und lediglich ein kleiner Spalt als Öffnung zum Durchlass von zerkleinerten Lebensmitteln übrig bleibt. Auf diese Weise kann ein sehr kleiner Zerkleinerungsgrad des Lebensmittels eingestellt werden. Mit den in Figuren 2 bis 4 gezeigten drei Verstellpositionen können also Positionen voreingestellt werden, die einen großen, einen mittleren und einen kleineren Durchlass bedingen und damit einen weiten Verstellbereich für die Voreinstellung zum Zerkleinern von Lebensmitteln zur Verfügung stellen. Selbstverständlich sind ohne Einschränkung der Erfindung auch mehrere und weitere Verstellpositionen denkbar. Allerdings wird bei mehrere und weitere Verstellpositionen die Bedienung wieder komplizierter, da mehrere Rastpositionen gewählt werden können, die näher beieinander liegen.

Figur 5 zeigt ein Beispiel von korrespondierenden Eingriffsmitteln am Behälter 150 und am Siebaufsatz 100. In diesem Beispiel sind am Siebaufsatz 100 Nuten 530, 535 und 540 angeordnet, welche mit entsprechenden Drehlagearretierungen des Behälters 150 und des Siebaufsatzes 100 gegeneinander korrespondieren und somit eine definierte Öffnungsgröße für den Durchlas0s von zerkleinerten Lebensmitteln vorgeben. Beispielsweise steht 530 für eine kleine Öffnung, die mit der Darstellung in Figur 4 korrespondiert, steht 535 für eine mittlere Öffnung, welche mit der Darstellung in Figur 3 korrespondiert und steht 540 für eine große Öffnung, welche mit der Darstellung in Figur 2 korrespondiert. An einem verbreiterten Kragen 155 ist beispielsweise eine Nase 550 angebracht, welche in Eingriff mit einer der Nuten 530, 535 und 540 gebracht werden kann, je nachdem in welcher Drehlage der Siebaufsatz auf einen Behälter aufgesetzt ist. Um also den Durchlass zu verstellen muss lediglich der Siebaufsatz leicht herausgezogen werden, sodass die am Siebaufsatz vorhandene Nut aus dem Eingriff mit dem Vorsprung 550 gebracht wird und eine Verdrehung des Siebaufsatzes möglich ist. Durch anschließendes Absenken in eine der gewünschten Drehpositionen 530, 535 oder 540 wird der Siebaufsatz wieder sicher gegenüber dem Behälter 150 arretiert. Die Länge des Axiallagers, welches vorzugsweise durch den Boden des Siebaufsatzes durchtritt kann dabei so gewählt werden, dass das Zerkleinerungswerkzeug bei leichtem Herausziehen des Siebaufsatzes 100 immer noch auf dem Axiallager verbleibt und somit eine Verstellung erfolgen kann, auch wenn bereits Lebensmittel in den Siebaufsatz eingefüllt sind.

In einer bevorzugten Ausführungsform sind längs entlang des Behälters 150 Führungsstege vorhanden, welche lösbar die Haltestruktur 170 aufnehmen, die an ihrem Umfang entsprechende Nuten 500 aufweist, welche von den Stegen 520 geführt werden.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

## Patentansprüche

1. Durchlassverstellvorrichtung (100, 150) mit Axiallager mindestens aufweisend:
- einen Siebaufsatz (100);
- einen Behälter (150) zur Aufnahme des Siebaufsatzes (100);
- eine Haltestruktur (180) für ein Axiallager (175);
**, wobei**
die Haltestruktur (180) in horizontaler Richtung im Wesentlichen quer zu einer Achse des Axiallagers (175) eine Verjüngung (170) aufweist und der Siebaufsatz (100) in horizontaler Richtung eine Öffnung (125) aufweist, die im aufgesetzten Zustand der Siebstruktur in einer gleichen Höhe zu liegen kommt wie die Verjüngung (170), dergestalt, dass diese in Kombination mit in derselben Ebene liegenden Öffnungen des Siebaufsatzes (100) durch geeignete Positionierung der Verjüngung (170) und der daran angrenzenden breiteren Materialstruktur der Haltestruktur (180) bei geeigneter Lage über der Öffnung (125) der Siebstruktur einen definierten Überlappungsbereich einstellbar ist, der eine planbare und vorgebbare Durchlassöffnung zwischen Haltestruktur und Öffnung im Siebaufsatz (100) freigibt., **dadurch gekennzeichnet, dass** der der Siebaufsatz (100) verdrehbar gegenüber dem Behälter (150) angeordnet ist und der Siebaufsatz (100) und der Behälter (150) korrespondierende Eingriffsmittel (550, 530, 535, 540) aufweisen, um die Drehlage des Siebaufsatzes (100) gegenüber dem Behälter (150) definiert in mindestens zwei Positionen zu fixieren.

2. Vorrichtung (100, 150) nach Patentanspruch 1 bei der die Verjüngung eine Ausnehmung (155) ist.

3. Vorrichtung (100, 150) nach einem der vorangehenden Ansprüche, bei der die Haltestruktur (180) einen horizontal verlaufenden Kragenbereich (165) in Nachbarschaft zur Verjüngung (170) aufweist.

4. Vorrichtung (100, 150) nach Anspruch 3 bei der in einer fixierten Position der Kragenbereich (165) die Öffnung (125) wenigstens teilweise überlappt.

5. Vorrichtung (100, 150) nach einem der vorangehenden Ansprüche, bei der der Siebaufsatz (100) einen flachen Kragenbereich (110) und einen daran angrenzenden kegelstumpfförmigen Bereich (120) aufweist und die Öffnung (125) im kegelstumpfförmigen Bereich angeordnet ist.

6. Vorrichtung (100, 150) nach einem der vorangehenden Ansprüche, bei der der Siebaufsatz (100) eine Öffnung für den Durchlass des Axiallagers (175) aufweist.

7. Vorrichtung (100, 150) nach einem der vorangehenden Ansprüche, bei der die Haltstruktur (180) lösbar im Behälter (150) angeordnet ist.

8. Vorrichtung zum Zerkleinern von Lebensmitteln mit einer Vorrichtung zur Durchlassverstellung nach einem der Ansprüche 1 bis 7 mit einem auf dem Axiallager (175) drehbar angeordneten Zerkleinerungswerkzeug.

## Claims

1. Passage adjustment apparatus (100, 150) with an axial bearing, at least having:
- a filter attachment (100);
- a container (150) for accommodating the filter attachment (100);
- a holding structure (180) for an axial bearing (175);
**wherein**
the holding structure (180) has a tapering (170) in the horizontal direction essentially transversely to an axis of the axial bearing (175) and the filter attachment (100) has an opening (125) in the horizontal direction which, in the attached state of the filter structure, comes to lie at the same height as the tapering (170) in such a way that, when combined with openings in the filter attachment (100) lying in the same plane, by suitably positioning the tapering (170) and the broader material structure of the holding structure (180) adjacent thereto, with a suitable position over the opening (125) of the filter structure, a defined overlap region can be set which releases a plannable and predefinable passage opening between holding structure and opening in the filter attachment (100), **characterised in that** the filter attachment (100) is arranged such that it can be twisted in relation to the container (150) and the filter attachment (100) and the container (150) have corresponding engagement means (550, 530, 535, 540) in order to fix the rotational position of the filter attachment (100) in relation to the container (150) in a defined manner in at least two positions.

2. Apparatus (100, 150) according to claim 1 in which the tapering is a recess (155).

3. Apparatus (100, 150) according to one of the preceding claims, in which the holding structure (180) has a horizontally running collar region (165) in the vicinity of the tapering (170).

4. Apparatus (100, 150) according to claim 3 in which the opening (125) at least partially overlaps in a fixed position of the collar region (165).

5. Apparatus (100, 150) according to one of the preceding claims, in which the filter attachment (100) has a flat collar region (110) and a truncated cone-shaped region (120) adjacent thereto and the opening (125) is arranged in the truncated cone-shaped region.

6. Apparatus (100, 150) according to one of the preceding claims, in which the filter attachment (100) has an opening for the passage of the axial bearing (175).

7. Apparatus (100, 150) according to one of the preceding claims, in which the holding structure (180) is arranged in the container (150) in a releasable manner.

8. Apparatus for chopping up foodstuffs with an apparatus for passage adjustment according to one of claims 1 to 7, with a chopping tool arranged such that it can rotate on the axial bearing (175).

## Revendications

1. Dispositif de réglage de passage (100, 150) à palier axial comprenant au moins :
- un embout de criblage (100) ;
- un contenant (150) pour l'accueil de l'embout de criblage (100) ;
- une structure de support (180) pour un palier (175) ;
**dans lequel**
la structure de support (180) présente en direction horizontale essentiellement transversalement à un axe du palier axial (175) un amincissement (170) et l'embout de criblage (100) présente en direction horizontale un orifice (125) qui, à l'état monté de la structure de criblage, s'arrête à une hauteur identique à celle de l'amincissement (170) de telle sorte que celle-ci permet d'ajuster, en combinaison avec les orifices de l'embout de criblage (100) se trouvant dans le même plan, par un positionnement approprié de l'amincissement (170) et de la structure de matériau de la structure de support (180) plus large y contiguë, en présence d'un positionnement approprié de la structure de criblage par-dessus l'orifice (125), une zone de chevauchement définie, qui libère un orifice de passage planifiable et prédéterminable entre la structure de support et l'orifice dans l'embout de criblage (100), **caractérisé en ce que** l'embout de criblage (100) est disposé de façon rotative par rapport au contenant (150) et l'embout de criblage (100) et le contenant (150) présentent des moyens d'engrènement correspondants (550, 530, 535, 540), afin de fixer la position de rotation de l'embout de criblage (100) par rapport au contenant (150) de façon définie dans au moins deux positions.

2. Dispositif (100, 150) selon la revendication 1, dans lequel l'amincissement est un évidement (155).

3. Dispositif (100, 150) selon l'une des revendications précédentes, dans lequel la structure de support (180) présente une zone de col s'étendant à l'horizontale (165) dans le voisinage de l'amincissement (170).

4. Dispositif (100, 150) selon la revendication 3, dans lequel dans une position fixée, la zone de col (165) chevauche au moins partiellement l'orifice (125).

5. Dispositif (100, 150) selon l'une des revendications précédentes, dans lequel l'embout de criblage (100) présente une zone de col plate (110) et une zone tronconique contiguë (120) et l'orifice (125) est disposé dans la zone tronconique.

6. Dispositif (100, 150) selon l'une des revendications précédentes, dans lequel l'embout de criblage (100) présente un orifice pour le passage du palier axial (175).

7. Dispositif (100, 150) selon l'une des revendications précédentes, dans lequel la structure de support (180) est disposée de façon amovible dans le contenant (150).

8. Dispositif pour la réduction de denrées alimentaires avec un dispositif de réglage de passage selon l'une des revendications 1 à 7 avec un outil de réduction disposé en rotation sur le palier axial (175).
